# EUROPEAN PATENT APPLICATION

(11) **EP 3 604 111 A1**
(43) Date of publication of application: **05.02.2020**
(21) Application number: 18775742.2
(22) Date of filing: 28.03.2018
(51) Int. Cl.: B63B 59/04, A01M 29/24, E02B 1/00

(54) **ORGANISM ADHESION SUPPRESSION METHOD AND ORGANISM ADHESION SUPPRESSION DEVICE**

(30) Priority: 28.03.2017 JP 2017062654
(71) Applicant: IHI Corporation, Tokyo 135-8710 (JP); Japan Marine United Corporation, Yokohama-City, Kanagawa 220-0012 (JP)
(72) Inventor: IAI Yuichi, Tokyo 135-8710 (JP); AKAMINE Kenichi, Tokyo 135-8710 (JP); YAKABE Natsuki, Tokyo 135-8710 (JP); MASUKO Akira, Yokohama-City Kanagawa 220-0012 (JP); AMAYA Ichiro, Yokohama-City Kanagawa 220-0012 (JP); SAITOH Yuhki, Yokohama-City Kanagawa 220-0012 (JP)
(74) Representative: Grünecker Patent- und Rechtsanwälte PartG mbB
(86) International application number: PCT/JP2018/012724
(87) International publication number: WO 2018/181464

(57) **Abstract**

An anti-biofouling method which suppresses biofouling in water includes a preparation step (S10) of using a copper alloy-made anti-biofouling object member immersed in the water as a cathode electrode, and immersing and arranging an anode electrode member serving as a counter electrode of the anti-biofouling object member in the water, and a current supplying step (S12) of supplying DC current between the anti-biofouling object member and the anode electrode member.

## Description

### [Technical Field]

The present disclosure relates to an anti-biofouling method and an anti-biofouling apparatus, and particularly to an anti-biofouling method and an anti-biofouling apparatus which suppress biofouling in water.

### [Background Art]

Marine organisms adhere to ship propellers, structures, and the like which are immersed in water such as seawater. The adhesion of marine organisms, for example barnacles, to such ship propellers and structures may result in an increase of fuel consumption of the ships and corrosion of the structures. A conventional solution to this problem is to clean the ship propellers, the structures, and the like by manually removing the organisms such as barnacles adhering thereto (see PTL1).

### [Citation List]

### [Patent Literature]

[PTL 1] Japanese Patent Application Publication No. 2012-36614

### [Summary of Invention]

### [Technical Problem]

Underwater organisms firmly adhere to ship propellers, structures, and the like made of copper alloy. For this reason, it is hard to remove the adhering organisms by manual work, and thus the cleaning may need a lot of labor.

With this taken into consideration, an object of the present disclosure is to provide an anti-biofouling method and an anti-biofouling apparatus which are capable of more easily suppressing biofouling.

### [Solution to Problem]

The anti-biofouling method according to the present disclosure is an anti-biofouling method which suppresses biofouling in water, and which includes a preparation step of using a copper alloy-made anti-biofouling object member immersed in the water as a cathode electrode, and immersing and arranging an anode electrode member serving as a counter electrode of the anti-biofouling object member in the water, and a current supplying step of supplying DC current between the anti-biofouling object member and the anode electrode member.

In the anti-biofouling method according to the present disclosure, in the current supplying step, the current with a water electrolysis start current density or greater may be supplied between the anti-biofouling object member and the anode electrode member.

In the anti-biofouling method according to the present disclosure, in the current supplying step, the current with a current density in a range of the water electrolysis start current density to 2.5 A/m² may be supplied between the anti-biofouling object member and the anode electrode member.

In the anti-biofouling method according to the present disclosure, the copper alloy may contain aluminum, and in the current supplying step, the current with a current density in a range of the water electrolysis start current density to 20 A/m² may be supplied between the anti-biofouling object member and the anode electrode member.

In the anti-biofouling method according to the present disclosure, in the current supplying step, the current with a current density of 0.06 A/m² or greater may be supplied.

In the anti-biofouling method according to the present disclosure, in the current supplying step, the current with a current density of 0.24 A/m² or greater may be supplied.

In the anti-biofouling method according to the present disclosure, the copper alloy may be aluminum bronze.

In the anti-biofouling method according to the present disclosure, the anti-biofouling object member may be a ship propeller.

In the anti-biofouling method according to the present disclosure, in the preparation step, additionally, a reference electrode may be further immersed and arranged in the water, and in the current supplying step, the DC current may be supplied between the ship propeller and the anode electrode member with a potential of the ship propeller kept constant relative to the reference electrode.

In the anti-biofouling method according to the present disclosure, in the preparation step, a water level sensor which measures a position of a waterline is further arranged, and in the current supplying step, a submerged propeller area under the waterline is obtained from the position of the waterline measured by the water level sensor, and an amount of DC current to be supplied between the ship propeller and the anode electrode member is changed depending on the submerged propeller area in order to keep the current density constant.

The anti-biofouling apparatus according to the present disclosure is an anti-biofouling apparatus which suppresses biofouling in water, and which includes an anode electrode member immersed in the water, and serving as a counter electrode of a copper alloy-made anti-biofouling object member which serves as a cathode electrode, a power supply electrically connected to the anti-biofouling object member and the anode electrode member, and a controller which controls the power supply to supply DC current between the anti-biofouling object member and the anode electrode member.

In the anti-biofouling apparatus according to the present disclosure, the controller may control the power supply to supply the current with a water electrolysis start current density or greater between the anti-biofouling object member and the anode electrode member.

In the anti-biofouling apparatus according to the present disclosure, the anti-biofouling object member may be a ship propeller.

The anti-biofouling apparatus according to the present disclosure, the ship propeller may be arranged on a stern side of a ship hull, and the anode electrode members may be provided to surround the ship propeller from a ship width direction of the ship propeller to a stern direction of the ship propeller.

The above configurations cause hypoxia around the anti-biofouling object member by supplying the DC current between the anti-biofouling object member and the anode electrode member, and thereby inhibit activities of underwater organisms to suppress biofouling with more ease.

### [Brief Description of Drawings]

[Fig. 1]

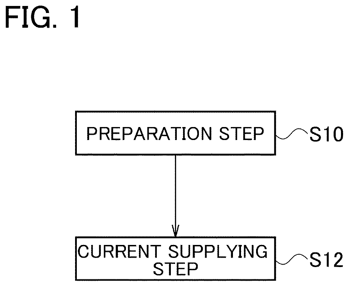

   Fig. 1 is a flowchart illustrating a configuration of an anti-biofouling method in an embodiment of the present disclosure.
[Fig. 2]

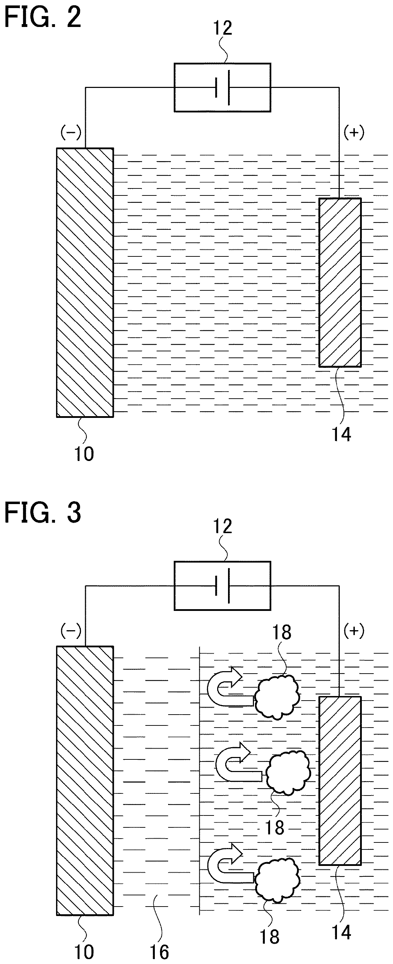

   Fig. 2 is a diagram for explaining a preparation step in the embodiment of the present disclosure.
[Fig. 3]
   Fig. 3 is diagram for explaining a current supplying step in the embodiment of the present disclosure.
[Fig. 4]

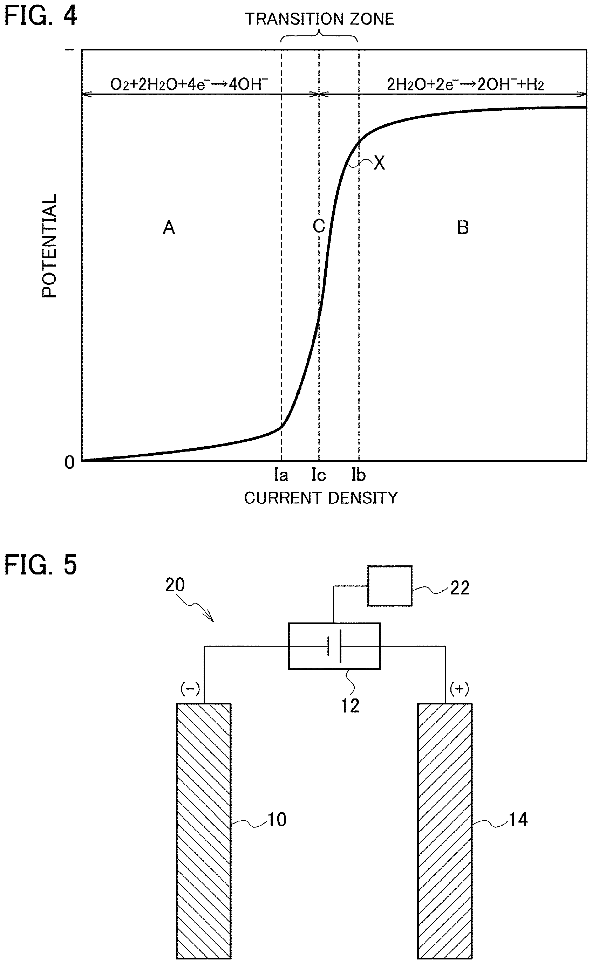

   Fig. 4 is a schematic diagram illustrating a relationship between a potential of an anti-biofouling object member and current density in the embodiment of the present disclosure.
[Fig. 5]
   Fig. 5 is a diagram illustrating a configuration of an anti-biofouling apparatus in the embodiment of the present disclosure.
[Fig. 6]

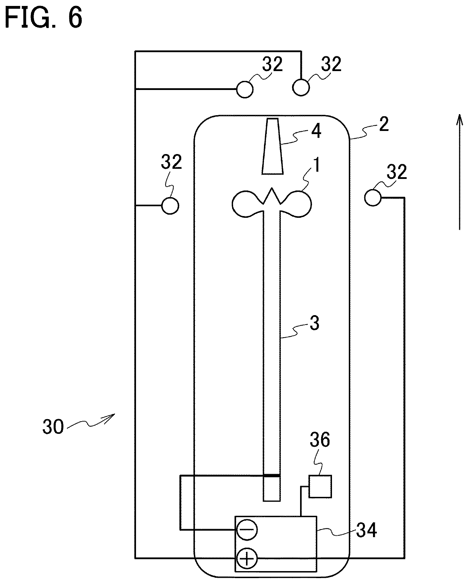

   Fig. 6 is a diagram for explaining an anti-biofouling apparatus for a ship propeller in the embodiment of the present disclosure.
[Fig. 7]

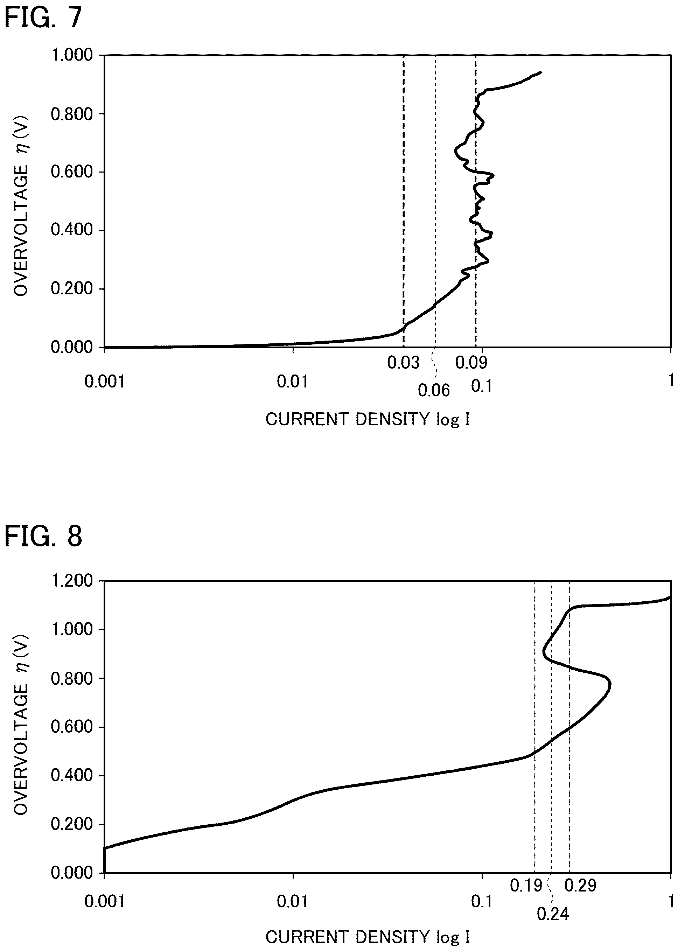

   Fig. 7 is a graph illustrating polarization characteristics of a test sample under a static water environment.
[Fig. 8]
   Fig. 8 is a graph illustrating polarization characteristics of the test sample under a flowing water environment.
[Fig. 9]

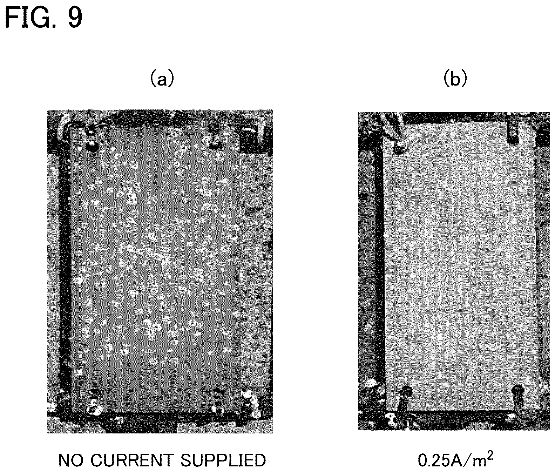

   Fig. 9 includes photographs respectively showing results of observing external appearances of the test samples.

### [Description of Embodiments]

Using the drawings, detailed descriptions will be hereinbelow provided for an embodiment of the present disclosure. Fig. 1 is a flowchart illustrating a configuration of an anti-biofouling method. The anti-biofouling method includes a preparation step (S10) and a current supplying step (S12) . The anti-biofouling method is a method which suppresses biofouling in water, such as seawater and freshwater. Examples of the underwater organisms include marine organisms such as barnacles.

The preparation step (S10) is a step of using a copper alloy-made anti-biofouling object member immersed in the water as a cathode electrode, and immersing and arranging an anode electrode member serving as a counter electrode of the anti-biofouling object member in the water. Fig. 2 is a diagram for explaining the preparation step (S10).

Examples of the anti-biofouling object member 10 include a ship member such as a ship propeller, and a marine structure member such as a thruster. More specifically, the anti-biofouling object member 10 may be, for example, a rotating body of a rotary machine provided to a propulsion apparatus which produces propulsion force, a position control apparatus to be used for position control, a direction change apparatus, or the like in a ship, a marine structure or the like. Examples of the rotating body of such a rotary machine include a propeller (screw), a propeller-type thruster, and a side thruster. Incidentally, the anti-biofouling object member 10 is not limited to any one of the examples cited herein, and various water-immersed structures (or their members) may be the anti-biofouling object member. The anti-biofouling object member 10 is electrically connected to the cathode electrode of a power supply 12. The anti-biofouling object member 10 is made of a copper alloy. The copper alloy is not specifically limited, but may be, for example, aluminum bronze and manganese brass. For example, in a case where the anti-biofouling object member 10 is a ship propeller, the anti-biofouling object member 10 may be made of aluminum bronze which is excellent in mechanical properties, corrosion resistance and the like. The aluminum bronze is a copper alloy which contains aluminum (Al), nickel (Ni), manganese (Mn) and iron (Fe), and whose remaining components are copper (Cu) and inevitable impurities. For example, Aluminum Bronze Cast Product Type 1 (ALBC1), Aluminum Bronze Cast Product Type 2 (ALBC2), Aluminum Bronze Cast Product Type 3 (ALBC3), and Aluminum Bronze Cast Product Type 4 (ALBC4) may be used as the aluminum bronze. For example, Aluminum Bronze Cast Product Type 3 (ALBC3) is a copper alloy which contains 8.5% to 10.5% by mass of Al, 3.0% to 6.0% by mass of Ni, 1.5% or less by mass of Mn, and 3.0% to 6.0% by mass of Fe, and whose remaining components are Cu and inevitable impurities.

The anode electrode member 14 is immersed in water, and arranged as the counter electrode of the anti-biofouling object member 10 serving as the cathode electrode. The anode electrode member 14 may be arranged near the anti-biofouling object member 10. The anode electrode member 14 is electrically connected to the anode of the power supply 12. The anode electrode member 14 is made from an insoluble anode, a soluble anode or the like.

The current supplying step (S12) is a step of supplying DC current between the anti-biofouling object member 10 and the anode electrode member 14. Fig. 3 is diagram for explaining the current supplying step (S12). The supplying of the DC current between the anti-biofouling object member 10 and the anode electrode member 14 consumes oxygen (oxygen and the like which are dissolved in the water) around the anti-biofouling object member 10 through reduction of the oxygen, and thereby forms a hypoxic region 16 around the anti-biofouling object member 10. This causes oxygen deficiency around the anti-biofouling object member 10, and thereby inhibits biological activities of organisms 18 such as barnacles to suppress adhesion of the organisms 18 to the anti-biofouling object member 10.

Next, detailed descriptions will be provided for how working is carried out for the organism adhesion suppression. Fig. 4 is a schematic diagram illustrating a relationship between a potential of the anti-biofouling object member 10 and current density. In the schematic diagram in Fig. 4, the horizontal axis represents the current density while the vertical axis represents the potential of the anti-biofouling object member 10, and the solid line schematically shows the potential of the anti-biofouling object member 10 relative to the current density.

While the water contains a lot of oxygen, the supplying of the DC current between the anti-biofouling object member 10 and the anode electrode member 14 causes a chemical reaction expressed with Chemical Formula 1 near the surface of the anti-biofouling object member 10. Through the chemical reaction expressed with Chemical Formula 1, the oxygen around the anti-biofouling object member 10 is reduced to form hydroxide ions (OH⁻), and oxygen contained in the water is consumed. This makes oxygen concentration lower around the anti-biofouling object member 10, and thereby forms the hypoxic region 16. In an oxygen reduction zone A like this, as the current density becomes higher, the potential of the anti-biofouling object member 10 becomes gradually higher.

[Chemical Formula 1] O₂+2H₂O+4e⁻ →4OH⁻

After all the oxygen around the anti-biofouling object member 10 is consumed, the supplying of the DC current between the anti-biofouling object member 10 and the anode electrode member 14 causes a chemical reaction expressed with Chemical Formula 2 near the surface of the anti-biofouling object member 10. Through the chemical reaction expressed with Chemical Formula 2, the water around the anti-biofouling object member 10 is electrolyzed to form hydroxide ions (OH⁻)and hydrogen (H₂). In a water electrolysis zone B like this, the potential of the anti-biofouling object member 10 remains substantially constant even though the current density increases.

[Chemical Formula 2] **2H₂O+2e⁻→2OH⁻+H₂**

A transition zone C where the change from the chemical reaction expressed with Chemical Formula 1 to the chemical reaction expressed with Chemical Formula 2 occurs near the surface of the anti-biofouling object member 10 is formed between the oxygen reduction zone A and the water electrolysis zone B. In the transition zone C, as the current density becomes higher, the potential of the anti-biofouling object member 10 becomes sharply higher.

The DC current with a water electrolysis start current density Ic or greater may be supplied between the anti-biofouling object member 10 and the anode electrode member 14. The water electrolysis start current density Ic is a current density in the transition zone C at which the water electrolysis starts after all the oxygen around the anti-biofouling object member 10 is consumed by its reduction. Since the DC current with the water electrolysis start current density Ic or greater is supplied between the anti-biofouling object member 10 and the anode electrode member 14, all the oxygen around the anti-biofouling object member 10 is consumed by its reduction. Accordingly, the organism adhesin suppression effect can be further enhanced.

The water electrolysis start current density Ic may be set at a current density (Ic=(Ia+Ib)/2) which is a mean between the current density Ia at a boundary between the oxygen reduction zone A and the transition zone C and the current density Ib at a boundary between the water electrolysis zone B and the transition zone C. For example, in a case where the current density Ia is 0.19 A/m² and the current density Ib is 0.29 A/m², the current density Ic may be set at 0.24 A/m². Incidentally, the current density Ia and the current density Ib can be obtained from inflection points or the like on a polarization curve X of the anti-biofouling object member 10 measured in advance.

The DC current may be supplied between the anti-biofouling object member 10 and the anode electrode member 14 with the current density Ia at the boundary between the oxygen reduction zone A and the transition zone C or greater. Since at the boundary between the oxygen reduction zone A and the transition zone C, almost all the oxygen near the surface of the anti-biofouling object member 10 is reduced and consumed, the adhesion of the orgasms can be suppressed. In addition, since the current density Ia at the boundary between the oxygen reduction zone A and the transition zone C is less than the water electrolysis start current density Ic, the power costs can be reduced even in a case where the current is supplied for a long time in order to suppress the adhesion of the organisms.

The DC current may be supplied between the anti-biofouling object member 10 and the anode electrode member 14 with the current density Ib at the boundary between the water electrolysis zone B and the transition zone C or greater. Since at the boundary between the water electrolysis zone B and the transition zone C, the oxygen around the anti-biofouling object member 10 is consumed more securely, the effect of suppressing the adhesion of the organisms can be further improved.

The current density with which the DC current is supplied between the anti-biofouling object member 10 and the anode electrode member 14 may be kept constant or may be changed. The current density may be kept constant. The constant current density makes it possible to easily supply the current. In addition, the constant current density means that the current density can be easily held suitable to suppress the adhesion of the organisms. Furthermore, the constant current density makes it possible to suppress the supply of the current in excess. The current may be usually continuously supplied between the anti-biofouling object member 10 and the anode electrode member 14. This makes it possible to further enhance the effect of suppressing the adhesion of the organisms.

In the current supplying step (S12), the DC current may be supplied between the anti-biofouling object member 10 and the anode electrode member 14 with a current density of 0.06 A/m² or greater. Because under the static water environment, the water electrolysis start current density Ic is 0.06 A/m², the current can be supplied therebetween with the current density Ic or greater. In addition, because under the static water environment, the current density Ia at the boundary between the oxygen reduction zone A and the transition zone C is 0.03 A/m², the current may be supplied between the anti-biofouling object member 10 and the anode electrode member 14 with a current density of 0.03 A/m² or greater. Furthermore, because under the static water environment, the current density Ib at the boundary between the water electrolysis zone B and the transition zone C is 0.09 A/m², the current may be supplied between the anti-biofouling object member 10 and the anode electrode member 14 with a current density of 0.09 A/m² or greater. Incidentally, the static water environment may be defined as a water area where the flow velocity is 0.5 m/s or less. The static water environment may be a water area, such as a pond, a swamp, a lake or a river where the flow is slow.

In the current supplying step (S12), the DC current may be supplied between the anti-biofouling object member 10 and the anode electrode member 14 with a current density of 0.24 A/m² or greater. Because under the flowing water environment, the water electrolysis start current density is 0.24 A/m², the current with the water electrolysis start current density Ic or greater can be supplied therebetween by setting the current density of the supplied current at 0.24 A/m² or greater. In addition, because under the flowing water environment, the current density Ia at the boundary between the oxygen reduction zone A and the transition zone C is 0.19 A/m², the current may be supplied between the anti-biofouling object member 10 and the anode electrode member 14 with a current density of 0.19 A/m² or greater. Furthermore, because under the flowing water environment, the current density Ib at the boundary between the water electrolysis zone B and the transition zone C is 0.29 A/m², the current may be supplied between the anti-biofouling object member 10 and the anode electrode member 14 with a current density of 0.29 A/m² or greater. Incidentally, the flowing water environment may be defined as a water area where the flow velocity is more than 0.5 m/s. The flowing water environment may be a water area, such as a river or the ocean.

In the current supplying step (S12), the DC current may be supplied between the anti-biofouling object member 10 and the anode electrode member 14 with a current density in a range of the water electrolysis start current density to 2.5 A/m². While the current is being supplied between the anti-biofouling object member 10 and the anode electrode member 14, hydrogen (H₂) is formed near the surface of the anti-biofouling object member 10 through the water electrolysis. The supplying of the DC current between the anti-biofouling object member 10 and the anode electrode member 14 with the current density of 2.5 A/m² or less makes it possible to suppress hydrogen embrittlement of the anti-biofouling object member 10. This makes it possible to suppress the adhesion of the organisms to the anti-biofouling object member 10 and to inhibit the hydrogen embrittlement. Under the static water environment, the DC current may be supplied between the anti-biofouling object member 10 and the anode electrode member 14 with a current density of 0.06 A/m² to 2.5 A/m². Under the flowing water environment, the DC current may be supplied between the anti-biofouling object member 10 and the anode electrode member 14 with a current density of 0.24 A/m² to 2.5 A/m².

In the current supplying step (S12), the DC current with a current density in a range of the water electrolysis start current density to 20 A/m² may be supplied between the anti-biofouling object member 10 and the anode electrode member 14. In the case where the copper alloy made into the anti-biofouling object member 10 is an aluminum-containing copper alloy such as an aluminum bronze, the hydroxide ions (OH⁻) formed by the water electrolysis is more likely to cause dealumunization corrosion. The supplying of the DC current between the anti-biofouling object member 10 and the anode electrode member 14 with a current density of 20 A/m² or less makes it possible to inhibit the dealumunization corrosion of the anti-biofouling object member 10. This makes it possible to suppress the adhesion of the organisms to the anti-biofouling object member 10 and to inhibit the dealumunization corrosion thereof. Under the static water environment, the DC current may be supplied between the anti-biofouling object member 10 and the anode electrode member 14 with a current density of 0.06 A/m² to 20 A/m². Under the flowing water environment, the DC current may be supplied between the anti-biofouling object member 10 and the anode electrode member 14 with a current density of 0.24 A/m² to 20 A/m².

Next, descriptions will be provided for an anti-biofouling apparatus which suppresses the adhesion of the organisms in water. Fig. 5 is a diagram illustrating a configuration of the anti-biofouling apparatus 20. The anti-biofouling apparatus 20 includes the anode electrode member 14, the power supply 12, and a controller 22 which controls the power supply 12.

The anode electrode member 14 is immersed in the water and has a function of serving as the counter electrode of the copper alloy-made anti-biofouling object member 10 which serves as the cathode electrode. An insoluble anode or a soluble anode may be used as the anode electrode member 14. Iridium oxide, platinum or the like may be used for the insoluble anode. Zinc, magnesium or the like may be used for the soluble anode. The shape of the anode electrode member 14 is not specifically limited, but may be columnar, rectangular columnar, or the like. A general galvanic anode or the like may be used as the anode electrode member 14.

The power supply 12 is electrically connected to the anti-biofouling object member 10 and the anode electrode member 14 via their respective electric cables or the like. The power supply 12 has the function of supplying the DC current between the anti-biofouling object member 10 and the anode electrode member 14. A general external power supply such as a potentio-galvanostat may be used as the power supply 12.

The controller 22 has a function of controlling the power supply 12 to control the supplying of the current between the anti-biofouling object member 10 and the anode electrode member 14. The controller 22 is electrically connected to the power supply 12 via an electric cable or the like. The controller 22 is capable of controlling the start of the current supply, the stop of the current supply, and the current density with which the DC current is supplied between the anti-biofouling object member 10 and the anode electrode member 14. The controller 22 is capable of, for example, controlling the power supply 12 to supply the DC current with the water electrolysis start current density or greater between the anti-biofouling object member 10 and the anode electrode member 14. The controller 22 may include a memory or the like which stores data such as the material of the anti-biofouling object member 10, the water electrolysis start current density, the current density at the boundary between the oxygen reduction zone A and the transition zone C, as well as the current density at the boundary between the water electrolysis zone B and the transition zone C. The controller 22 can be constructed, for example, using a general microcomputer or the like. Incidentally, the controller 22 may be integrated with the power supply 12.

It should be noted that while the DC current is being supplied between the anti-biofouling object member 10 serving as the cathode electrode and the anode electrode member 14 in seawater, calcium (Ca) and magnesium (Mg) included in the seawater form calcareous coating made of CaCO₃, Mg(OH)₂ and the like on the surface of the anti-biofouling object member 10. The supplying of the current in the seawater like this forms the calcareous coating and the hypoxic region 16 around the anti-biofouling object member 10, and accordingly makes it possible to further suppress the adhesion of the organisms.

In addition, in the case where the calcareous coating is formed on the surface of the anti-biofouling object member 10, the calcareous coating can be easily peeled off and removed by supplying the DC current therebetween with a current density of 5 A/m² or greater after a period of the organism adhesion suppression is over. The supplying of the current therebetween with the current density of 5 A/m² or greater can produce hydrogen gas on the surface of the anti-biofouling object member 10, and accordingly can cause the hydrogen gas to push up and peel off the calcareous coating from the surface thereof. In addition, the supplying of the current accumulates the hydroxide ions on the surface of the anti-biofouling object member 10 to raise the pH, and accordingly can facilitate the peeling off of the calcareous coating.

For example, in a case where the anti-biofouling object member 10 is a ship propeller, the DC current with a current density in a range of the water electrolysis start current density to 5 A/m² (exclusive of 5 A/m²) may be supplied therebetween from the start through end of an anchorage period of the ship, and the DC current may be supplied therebetween with a current density of 5 A/m² or greater after the end of the anchorage period of the ship. Thereby, during the anchorage period, the calcareous coating and the hypoxic region 16 are formed, and the adhesion of the organisms is accordingly further suppressed. On the other hand, after the end of the anchorage period, the calcareous coating is peeled off and removed, and the ship propeller can be easily returned to an initial condition before the anchorage period.

Next, descriptions will be provided for an anti-biofouling apparatus to be used for the ship propeller which is the anti-biofouling object member 10. Fig. 6 is a diagram for explaining a configuration of the anti-biofouling apparatus 30 for the ship propeller. Incidentally, an arrow in Fig. 6 represents a direction toward a stern of the ship.

The ship propeller 1 is arranged on a stern side of the ship 2, and is rotatably attached to a propeller shaft 3. A rudder 4 is provided on a stern side of the ship propeller 1 with a space between the rudder 4 and the ship propeller 1. The ship propeller 1 is made of a copper alloy, such as an aluminum bronze which is excellent in mechanical properties, corrosion resistance and the like.

The anti-biofouling apparatus 30 for the ship propeller 1 includes an anode electrode member 32, a power supply 34 and a controller 36.

The anode electrode member 32 is immersed in the water and has a function of serving as the counter electrode of the copper alloy-made ship propeller 1 serving as the cathode electrode. The anode electrode member 32 may use the same material and shape as those of the above-discussed anode electrode member 14. The anti-biofouling apparatus 30 may be provided with at least one anode electrode member 32, or anode electrode members 32.

The anode electrode members 32 may be provided to surround the ship propeller 1 from a ship width direction of the ship propeller 1 to the stern direction of the ship propeller 1. This makes it possible to cover around the ship propeller 1 with the hypoxic region, and accordingly makes it possible to suppress the adhesion of the organisms to the ship propeller 1.

Furthermore, the anode electrode members 32 may be provided to surround the ship propeller 1 in an arc from the ship width direction of the ship propeller 1 to the stern direction of the ship propeller 1. The anode electrode members 32 to surround the ship propeller 1 in an arc makes the distances between the respective anode electrode members 32 and the ship propeller 1 equal to one another, and can accordingly form a more homogeneously hypoxic region around the ship propeller 1.

For example, the anode electrode members 32 may be provided at the both sides of the ship propeller 1 in the ship width direction with a space between each anode electrode member 32 and a ship hull 2. In addition, the anode electrode members 32 may be provided at the both sides of a rudder 4 away in the stern direction from the ship propeller 1 with a space between each anode electrode member 32 and the ship hull 2. Incidentally, although Fig. 6 illustrates the anode electrode members 32 arranged in the four respective locations, the number of locations in which to arrange the respective anode electrode members 32 is not limited to four.

The power supply 34 is electrically connected to the ship propeller 1 and the anode electrode members 32 via electric cables or the like. The power supply 34 has a function of supplying DC current between the ship propeller 1 and the anode electrode members 32. The anode of the power supply 34 is electrically connected to the anode electrode members 32 via the corresponding electric cables or the like. The cathode electrode of the power supply 34 may be electrically connected to the ship propeller 1 via the corresponding electric cable or the like, or may be electrically connected to the ship propeller 1 via the propeller shaft 3 by being electrically connected to the propeller shaft 3 via the corresponding electric cable or the like. Incidentally, in the case where the cathode electrode of the power supply 34 is intended to be electrically connected to the propeller shaft 3, the propeller shaft 3 is made of an electrically-conductive material such as a metal material. An external power supply such as a potentio-galvanostat may be used as the power supply 34, like as the power supply 12. The power supply 34 may be arranged, for example, close to the bow beyond the propeller shaft 3.

The controller 36 has a function of controlling the power supply 34 to control the supplying of the current between the ship propeller 1 and the anode electrode members 32. The controller 36 is electrically connected to the power supply 34 via an electric cable or the like. The controller 36 is capable of controlling the start of the current supply, the stop of the current supply, and the current density with which the DC current is supplied between the ship propeller 1 and the anode electrode members 32. The controller 36 is capable of, for example, controlling the power supply 34 to supply the DC current with the water electrolysis start current density or greater between the ship propeller 1 and the anode electrode members 32. The controller 36 may include a memory or the like which stores data such as the material, shape and dimensions of the ship propeller 1, the water electrolysis start current density, the current density at the boundary between the oxygen reduction zone A and the transition zone C, as well as the current density at the boundary between the water electrolysis zone B and the transition zone C. Like the controller 22, the controller 36 may be constructed, for example using a general microcomputer or the like. Incidentally, the controller 36 may be integrated with the power supply 34. The controller 36 may be arranged, for example, close to the bow beyond the propeller shaft 3.

It should be noted that the anode electrode members not only may be arranged to surround the ship propeller 1, as illustrated in Fig. 6, but also may be attached to the ship hull 2. The anode electrode members can be attached to the lateral surfaces and the bottom surface of the ship hull 2 while electrically insulated from the ship hull 2. The anode electrode members may be attached near the ship propeller 1. Even in a case where no spaces are available for arranging the anode electrode members to surround the ship propeller 1, the attaching of the anode electrode members to the ship hull 2 makes it possible to suppress the adhesion of the organisms.

Next, descriptions will be provided for a method of suppressing the adhesion of the organisms to the ship propeller 1.

In a preparation step (S12), as discussed above, the water-immersed, copper alloy-made ship propeller 1 is used as the cathode electrode, and the anode electrode members 32 serving as the counter electrodes of the ship propeller 1 are immersed and arranged in the water.

In a current supplying step (S14), the DC current is supplied between the ship propeller 1 and the anode electrode members 32. The supplying of the DC current between the ship propeller 1 and the anode electrode members 32 consumes oxygen (oxygen and the like which are dissolved in the water) around the ship propeller 1 through reduction of the oxygen, and thereby forms a hypoxic region around the ship propeller 1. The DC current with the water electrolysis start current density or greater may be supplied between the ship propeller 1 and the anode electrode members 32. This causes oxygen deficiency around the ship propeller 1, and thereby inhibits biological activities of the organisms such as barnacles to suppress the adhesion of the organisms to the ship propeller 1.

It should be noted that the current density with which the DC current is supplied between the ship propeller 1 and the anode electrode members 32 may be kept constant or may be changed. The current density may be kept constant. The constant current density makes it possible to easily supply the current. In addition, the constant current density means that the current density can be easily held suitable to suppress the adhesion of the organisms. Furthermore, the constant current density makes it possible to easily suppress the supply of the current in excess.

Furthermore, the method of suppressing the adhesin of the organisms to the ship propeller 1 may change the amount of DC current to be supplied between the ship propeller 1 and the anode electrode members 32, depending on a submerged propeller area under the waterline. Thereby, the current density with which the current is supplied therebetween can be kept more constant even in a case where the submerged propeller area under the waterline changes.

More specifically, the ship propeller 1 becomes fouled and damaged mainly due to the adhesion of marine organisms and the like to the ship propeller 1 during the anchorage period of the ship. During the anchorage period, a part of the ship propeller 1 is more likely to become exposed to the atmosphere from the water surface because the position of the waterline changes as the ship is loaded or unloaded. Like this, the ship propeller 1 changes the submerged propeller area under the waterline during the anchorage period. Incidentally, organisms adhere to the ship propeller 1 while the ship propeller 1 is immersed in water, but almost no organisms adhere to the ship propeller 1 while the ship propeller 1 is exposed to the atmosphere.

In such a case, the supplying of the DC constant current between the ship propeller 1 and the anode electrode members 32 changes the current density due to the change in the submerged propeller area. For example, in a case where a constant current is supplied therebetween, the current density becomes larger as the submerged propeller area becomes smaller, and accordingly there is more likelihood that the current in excess is supplied. On the other hand, in the case where the constant current is supplied therebetween, the current density becomes smaller as the submerged propeller area becomes larger, and accordingly there is more likelihood that the current density can be no longer kept at an appropriate level and decreases the effect of suppressing the adhesin of the organisms.

For these reasons, the method of suppressing the adhesion of the organisms to the ship propeller 1 may employ a method as follows. In the preparation step (S12), additionally, a reference electrode may be immersed and arranged in the water, and in the current supplying step (S14), the DC current may be supplied between the ship propeller 1 and the anode electrode members 32 with a potential of the ship propeller 1 kept constant relative to the reference electrode.

The reference electrode may be arranged near the ship propeller 1. The reference electrode is electrically connected to the power supply 34 via an electric cable or the like. A silver-silver chloride electrode, a saturated calomel electrode, a hydrogen electrode or the like may be used as the reference electrode.

The controller 36 controls the potential of the ship propeller 1 such that the potential thereof is kept constant relative to the reference electrode to become a constant potential. Thereby, even in a case where a change in the position of the waterline changes the submerged propeller area of the ship propeller 1, the voltage between the ship propeller 1 and each anode electrode member 32 is automatically adjusted in order to keep the potential of the ship propeller 1 constant. This causes the amount of current to automatically change depending on the submerged propeller area, and makes it possible to make the current density tend to be constant. More specifically, this makes it possible to make the current density tend to be more constant because as the submerged propeller area becomes larger, the amount of current becomes larger, and as the submerged propeller area becomes smaller, the amount of current becomes smaller.

It should be noted that the potential of the ship propeller 1 may be set at a potential which enables the current to be supplied with a current density set to suppress the adhesion of the organisms. The potential of the ship propeller 1 may be set at, for example, a potential which enables the current with the water electrolysis start current density or greater to be supplied. The potential of the ship propeller 1 can be obtained through an experiment, an analysis or the like which is performed in advance.

In addition, the method of suppressing the adhesion of the organisms to the ship propeller 1 may employ a method as follows. In the preparation step (S12), additionally, a water level sensor which measures the position of the waterline may be arranged therein, and in the current supplying step (S14), the submerged propeller area under the waterline may be obtained from the position of the waterline measured by the water level sensor, and an amount of DC current to be supplied between the ship propeller 1 and each anode electrode member 32 may be changed depending on the submerged propeller area in order to keep the current density constant.

A general water level sensor capable of measuring a position of a waterline of a ship may be used as the water level sensor. The water level sensor is electrically connected to the controller 36 via an electric cable or the like.

Water level information on the waterline measured by the water level sensor is sent to the controller 36. From this information, as well as the shape, dimensions and the like of the ship propeller 1, the controller 36 calculates the submerged propeller area under the waterline, for the purpose of obtaining the current density. Depending on the calculated submerged propeller area, the controller 36 changes the amount of DC current to be supplied between the ship propeller 1 and each anode electrode member 32. More specifically, the controller 36 performs the control such that the amount of DC current becomes smaller as the submerged propeller area becomes smaller, and the amount of DC current becomes larger as the submerged propeller area becomes larger. This makes it possible to keep the current density constant depending on the submerged propeller area of the ship propeller 1 under the waterline.

Like this, the anti-biofouling apparatus 30 forms a hypoxic region around the ship propeller 1 through the reduction and consumption of oxygen by supplying the DC current between the ship propeller 1 and each anode electrode member 32. This causes oxygen deficiency around the ship propeller 1, and thereby suppresses the adhesion of the organisms to the ship propeller 1. Furthermore, although the ship propeller 1 becomes fouled and damaged mainly due to the adhesion of marine organisms to the ship propeller 1 during the anchorage period of the ship, the anti-biofouling apparatus 30 is capable of suppressing the adhesion of the organisms to the ship propeller 1 by supplying the current between the ship propeller 1 and each anode electrode member 32. Accordingly, the anti-biofouling apparatus 30 is capable of preventing the adhesion of the organisms using the method simpler than a manual work of removing the adhering organisms.

In sum, the anti-biofouling method having the above configuration includes the preparation step of using the copper alloy-made anti-biofouling object member immersed in the water as the cathode electrode, and immersing and arranging the anode electrode member serving as the counter electrode of the anti-biofouling object member in the water, and the current supplying step of supplying the DC current between the anti-biofouling object member and the anode electrode member. The anti-biofouling method, therefore, consumes oxygen through the reduction and forms the hypoxic region around the anti-biofouling object member. Thereby, the anti-biofouling method causes the oxygen deficiency around the anti-biofouling object member, and suppresses the adhesion of the organisms to the anti-biofouling object member. In addition, the anti-biofouling method can suppress the adhesion of the organisms to the anti-biofouling object member by supplying the current between the anti-biofouling object member and the anode electrode member, and can prevent the adhesion of the organisms using the method simpler than the manual work of removing the adhering organisms.

The anti-biofouling apparatus having the above configuration includes the anode electrode member immersed in the water, and serving as the counter electrode of the copper alloy-made anti-biofouling object member which serves as the cathode electrode, the power supply electrically connected to the anti-biofouling object member and the anode electrode member, and the controller which controls the power supply to supply the DC current between the anti-biofouling object member and the anode electrode member. The anti-biofouling apparatus is therefore capable of consuming oxygen through the reduction and forming the hypoxic region around the anti-biofouling object member. Accordingly, the anti-biofouling apparatus causes the oxygen deficiency around the anti-biofouling object member, and is thus capable of suppressing the adhesion of the organisms to the anti-biofouling object member.

### Example

### (Polarization Characteristics under Static Water Environment)

The current density for suppressing the adhesion of organisms was examined under the static water environment. To begin with, descriptions will be provided for test conditions. A test sample to be used as the cathode electrode was formed in the shape of a flat plate with a length of 150 mm, a width of 70 mm and a thickness of 3.0 mm (with an evaluation area of 140 cm²). The material of the test sample was Aluminum Bronze Cast Product Type 3 (ALBC3). The anode electrode member was a round bar with an outer diameter of 20 mm and a length of 150 mm. The material of the anode electrode member was zinc.

The test sample and the anode electrode member were immersed and arranged in an electrolyte solution held in a tank. The electrolyte solution was natural seawater. The distance between the test sample and the anode electrode member was approximately 50 mm. A saturated calomel electrode (SCE) was used as the reference electrode. The current density was measured by sweeping the potential at a potential sweep speed of 1 mV/min using an external power supply (a potentio-galvanostat). The range of the potential sweep was from the natural potential of the test sample to 1.2V vs SCE.

Next, descriptions will be provided for polarization characteristics of the test sample under the static water environment. Fig. 7 is a graph illustrating the polarization characteristics of the test sample under the static water environment. In the graph of Fig. 7, the horizontal axis represents the current density while the vertical axis represents overvoltage (the potential of the test sample), and the solid line represents the polarization curve of the test sample. In the transition zone, the current density was observed in a range of 0.03 A/m² to 0.09 A/m². More specifically, the current density Ia at the boundary between the oxygen reduction zone and the transition zone was 0.03 A/m² while the current density Ib at the boundary between the water electrolysis zone and the transition zone was 0.09 A/m². From the current density Ia and the current density Ib, the water electrolysis start current density Ic was calculated using the equation Ic=(Ia+Ib)/2. The current density Ic was 0.06 A/m². The following was learned from the test result. Under the static water environment, the DC current may be supplied with a current density of 0.06 A/m² or greater for the purpose of suppressing the adhesion of organisms. Under the static water environment, the current may be supplied with a current density of 0.03 A/m² or greater, and with a current density of 0.09 A/m² or greater for the same purpose.

### (Polarization Characteristics under Flowing Water Environment)

The current density for suppressing the adhesion of organisms was examined under the flowing water environment. To begin with, descriptions will be provided for test conditions. The test conditions under the flowing water environment was different from the test conditions under the static water environment in that the electrolyte solution was agitated by aeration in order to evaluate influence of a flowing water such as an ocean current or a tidal current (in the test under the static water environment, the electrolyte solution was not agitated by aeration). The other conditions were the same between the test under the flowing water environment and the test under the static water environment. The aeration method was that in which the electrolyte solution was agitated by producing air bubbles in the electrolyte solution using an air pump and ceramic air stone with a diameter of 30 mm, a length of 50 mm, and a weight of 50 g). An air pump CHIKARA α 1500 made by Nisso Industry Co., Ltd. was used as the air pump. The diameter of the air bubbles was approximately 1 mm to 10 mm.

Next, descriptions will be provided for polarization characteristics of the test sample under the flowing water environment. Fig. 8 is a graph illustrating the polarization characteristics of the test sample under the flowing water environment. In the graph of Fig. 8, the horizontal axis represents the current density while the vertical axis represents overvoltage (the potential of the test sample), and the solid line represents the polarization curve of the test sample. In the transition zone, the current density was observed in a range of 0.19 A/m² to 0.29 A/m². More specifically, the current density Ia at the boundary between the oxygen reduction zone and the transition zone was 0.19 A/m² while the current density Ib at the boundary between the water electrolysis zone and the transition zone was 0.29 A/m². From the current density Ia and the current density Ib, the water electrolysis start current density Ic was calculated using the equation Ic=(Ia+Ib)/2. The current density Ic was 0.24 A/m². The following was learned from the test result. Under the flowing water environment, the DC current may be supplied with a current density of 0.24 A/m² or greater for the purpose of suppressing the adhesion of organisms. Under the flowing water environment, the current may be supplied with a current density of 0.19 A/m² or greater, and with a current density of 0.29 A/m² or greater for the same purpose.

### (Test for Evaluating Adhesion of Organisms)

Next a test for evaluating the adhesion of organisms was carried out by immersing test samples on an actual sea area. The test samples were each formed in the shape of a flat plate with a length of 300 mm, a width of 150 mm and a thickness of 3.0 mm. The material of the test samples was Aluminum Bronze Cast Product Type 3 (ALBC3). Each anode electrode member was a round bar made of a titanium iridium-based material. The area of the current supply was 0.089 m².

In the test for evaluating the adhesion of organisms, one test sample was uses as the cathode electrode, and the DC current was supplied between the test sample and the anode electrode member using the external power supply (the potentio-galvanostat) for four months (Example 1). The current density was 0.25 A/m². Meanwhile, no current was supplied between the other test sample and the anode electrode member (Comparative Example 1). After the four months elapsed, the external appearances of the respective test samples were observed.

Fig. 9 includes photographs respectively showing the results of observing the external appearances of the test samples. Fig. 9(a) is a photograph showing the result of observing the external appearance of the test sample obtained through the method according to Comparative Example 1, while Fig. 9(b) is a photograph showing the result of observing the external appearance of the test sample obtained through the method according to Example 1. In the test sample obtained through the method according to Comparative Example 1, the adhesion of organisms and corrosion were observed in its wide area. In contrast to this, in the test sample obtained through the method according to Example 1, neither adhesion of organisms nor corrosion was observed. From the test result, it was learned that the adhesion of organisms to the test sample was able to be prevented by supplying the DC current between the test sample and the anode electrode member.

### (Corrosiveness Evaluation)

Corrosiveness of dealumunization corrosion was evaluated. To begin with, descriptions will be provided for test conditions for the corrosiveness evaluation. The test sample was formed in the shape of a flat plate with a length of 150 mm, a width of 70 mm and a thickness of 3.0 mm. The material of the test sample was Aluminum Bronze Cast Product Type 3 (ALBC3). The anode electrode member was a round bar with an outer diameter of 20 mm and a length of 150 mm. The material of the anode electrode member was zinc.

The test sample and the anode electrode member were immersed and arranged in an electrolyte solution. The electrolyte solution was natural seawater. The distance between the test sample and the anode electrode member was approximately 240 mm. A saturated calomel electrode (SCE) was used as the reference electrode. Using the external power supply (the potentio-galvanostat), the DC current was supplied between the test sample and the anode electrode member with a current density of 20 A/m². While the current was being supplied, the electrolyte solution was agitated by aeration. The period for which the current was being supplied was 7 days.

After the end of the current supply, the external appearance of the test sample was observed. No corrosion-induced surface roughness, pit or depletion was found. The weight of the test sample was measured before and after the current was supplied. Its weight measured 241.092 g before the current was supplied, and measured 241.154 g after the current was supplied. It was learned that after the current was supplied, no decrease in the weight of the test sample due to the corrosion was observed and the test sample kept corrosion resistance. From the result of evaluating the corrosiveness, it was learned that in the case where the test sample was made of an aluminum-containing copper alloy such as an aluminum bronze, no dealumunization corrosion occurred even though the DC current was supplied with a current density of 20 A/m².

### (Hydrogen Embrittlement Evaluation)

Influence of hydrogen on the hydrogen embrittlement was evaluated. The test sample was formed in the shape of a tensile test specimen. The material of the test sample was Aluminum Bronze Cast Product Type 3 (ALBC3) . The anode electrode member was a round bar with an outer diameter of 20 mm and a length of 150 mm. The material of the anode electrode member was zinc.

The test sample and the anode electrode member were immersed and arranged in the electrolyte solution. The electrolyte solution was 3.5wt% saline solution. The distance between the test sample and the anode electrode member was approximately 270 mm. A saturated calomel electrode (SCE) was used as the reference electrode. Using the external power supply (the potentio-galvanostat), the DC current was supplied between the test sample and the anode electrode member with a current density of 2.5 A/m². The period for which the current was being supplied was 28 days.

After the current was supplied, a tensile test was carried out at room temperature. The tensile test was carried out in accordance with JIS Z 2241:2011 "Metallic materials-Tensile testing-Method." Before the current was supplied, the tensile strength of the test sample was 755 MPa, and the elongation thereof was 15%. After the current was supplied, the tensile strength of the test sample was 785 MPa, and the elongation thereof was 19%. From the test result, it was learned that no hydrogen embrittlement occurred even though the DC current was supplied to the test sample with a current density of 2.5 A/m².

### [Industrial Applicability]

Since the hypoxia is caused around the anti-biofouling object member to inhibit the activities of the underwater organisms and to thereby suppress the adhesion of the organisms with more ease, the present disclosure is useful for ship members such as a ship propeller, marine structure members such as a thruster, and the like.

## Claims

1. An anti-biofouling method which suppresses biofouling in water, comprising:
a preparation step of using a copper alloy-made anti-biofouling object member immersed in the water as a cathode electrode, and immersing and arranging an anode electrode member serving as a counter electrode of the anti-biofouling object member in the water; and
a current supplying step of supplying DC current between the anti-biofouling object member and the anode electrode member.

2. The anti-biofouling method according to claim 1, wherein in the current supplying step, the current with a water electrolysis start current density or greater is supplied between the anti-biofouling object member and the anode electrode member.

3. The anti-biofouling method according to claim 2, wherein in the current supplying step, the current with a current density in a range of the water electrolysis start current density to 2.5 A/m² is supplied between the anti-biofouling object member and the anode electrode member.

4. The anti-biofouling method according to claim 2, wherein
the copper alloy contains aluminum, and
in the current supplying step, the current with a current density in a range of the water electrolysis start current density to 20 A/m² is supplied between the anti-biofouling object member and the anode electrode member.

5. The anti-biofouling method according to any one of claims 2 to 4, wherein in the current supplying step, the current with a current density of 0.06 A/m² or greater is supplied.

6. The anti-biofouling method according to any one of claims 2 to 4, wherein in the current supplying step, the current with a current density of 0.24 A/m² or greater is supplied.

7. The anti-biofouling method according to any one of claims 1 to 6, wherein the copper alloy is aluminum bronze.

8. The anti-biofouling method according to any one of claims 1 to 7, wherein the anti-biofouling object member is a ship propeller.

9. The anti-biofouling method according to claim 8, wherein
in the preparation step, additionally, a reference electrode is immersed and arranged in the water, and
in the current supplying step, the DC current is supplied between the ship propeller and the anode electrode member with a potential of the ship propeller kept constant relative to the reference electrode.

10. The anti-biofouling method according to claim 8, wherein
in the preparation step, a water level sensor which measures a position of a waterline is further arranged, and
in the current supplying step, a submerged propeller area under the waterline is obtained from the position of the waterline measured by the water level sensor, and an amount of DC current to be supplied between the ship propeller and the anode electrode member is changed depending on the submerged propeller area in order to keep the current density constant.

11. An anti-biofouling apparatus which suppresses biofouling in water, comprising:
an anode electrode member immersed in the water, and serving as a counter electrode of a copper alloy-made anti-biofouling object member which serves as a cathode electrode;
a power supply electrically connected to the anti-biofouling object member and the anode electrode member; and
a controller which controls the power supply to supply DC current between the anti-biofouling object member and the anode electrode member.

12. The anti-biofouling apparatus according to claim 11, wherein the controller controls the power supply to supply the current with a water electrolysis start current density or greater between the anti-biofouling object member and the anode electrode member.

13. The anti-biofouling apparatus according to claim 11 or 12, wherein the anti-biofouling object member is a ship propeller.

14. The anti-biofouling apparatus according to claim 13, wherein
the ship propeller is arranged on a stern side of a ship hull, and
the anode electrode members are provided to surround the ship propeller from a ship width direction of the ship propeller to a stern direction of the ship propeller.
